# EUROPÄISCHE PATENTSCHRIFT

(11) **EP 0 559 850 B1**
(45) Veröffentlichungstag und Bekanntmachung des Hinweises auf die Patenterteilung: **29.05.1996**
(21) Anmeldenummer: 92917065.2
(22) Anmeldetag: 18.08.1992
(51) Int. Cl.: E01B 35/00, G01C 15/00, G05D 1/03

(54) **VERFAHREN ZUR GELEISEVERMESSUNG**
PROCESS FOR MEASURING RAILWAY LINES
PROCEDE DE MESURAGE DE VOIES DE CHEMIN DE FER

(30) Priorität: 26.09.1991 CH 2854/91
(43) Veröffentlichungstag der Anmeldung: 15.09.1993
(73) Patentinhaber: J. MÜLLER AG, CH-8307 Effretikon (CH)
(72) Erfinder: JÄGER, Heinz, CH-8604 Volketswil (CH)
(74) Vertreter: Troesch Scheidegger Werner AG
(86) Internationale Anmeldenummer: CH9200165
(87) Internationale Veröffentlichungsnummer: WO9306303

(56) Entgegenhaltungen:
- EP-A- 0 213 253
- EP-A- 0 273 976
- EP-A- 0 309 962
- WO-A-89/07688

## Beschreibung

Die vorliegende Erfindung betrifft ein Verfahren nach dem Oberbegriff von Anspruch 1 sowie eine Messeinrichtung zur Durchführung des Verfahrens.

Insbesondere für den Unterhalt von Geleisen für Eisenbahnen muss der Geleiseverlauf genau ausgemessen, mit einem Soll-Plan verglichen und danach allfällige Korrekturen am Geleiseverlauf angebracht werden. Solche für diesen Zweck eingesetzte Geleiseunterhaltsmaschinen sind sehr grosse und komplexe Gebilde, welche auf den Geleisen selbst fahren und beispielsweise bestehende Schienenstücke heraustrennen und neue einsetzen oder den Schotter reinigen können. Dazu fährt eine solche Maschine langsam stetig auf dem Geleise voran. Die Position dieser Maschine und damit die Lage der Geleise muss in Relation zu an am Rand der Geleise, üblicherweise an den Fahrleitungsmasten, positionierten Referenzmarkierungen gemessen werden. Bei den heute bekannten Vermessungssystemen wird mittels optischer Geräte üblicherweise von einer separaten Referenzeinrichtung zur Maschine gemessen. Diese Referenzeinrichtungen werden auf den Geleisen in einigem Abstand zur Unterhaltsmaschine positioniert und ihre Lage zu den erwähnten Referenzmarken bestimmt d.h. gemessen. Dabei werden sowohl optische Winkelmesseinrichtungen wie auch Messbänder verwendet. Diese Art der Messung ist sehr zeit- und bedienungsintensiv, da die Referenzeinrichtungen ständig auf- und wieder abgebaut werden müssen und auch mehrere Messungen für eine Positionsbestimmung notwendig sind. Um die Unterbrechungszeiten, die beim Wechseln der Messung von einer Referenzeinrichtung zur nächsten notwendig ist, möglichst klein zu halten, werden gleichzeitig mehrere derartige Einrichtungen benötigt, die laufend auf- und abgebaut werden.

So ist zum Beispiel aus EP-A-0 213 253 ein solches Verfahren bekannt. Das darin beschriebene Messverfahren zeichnet sich dadurch aus, dass eine separate, auf dem Geleise verfahrbare Referenzeinrichtung (Satelitenwagen) verwendet wird. Diese Referenzeinrichtung wird an einem vorbestimmten Punkt auf dem Geleise positioniert, welcher in der Regel zu einem neben dem Geleise angeordneten Referenzpunkt benachbart ist. Die eigentlichen Messvorrichtungen sind nun auf dieser Referenzeinrichtung angebracht. Bei stillstehender Referenzeinrichtung wird nun die IST-Position bezüglich des Referenzpunktes bestimmt und gegebenenfalls die Abweichung bezüglich einer SOLL-Position, welche beispielsweise in einem Vermessungsplan festgehalten ist, bestimmt. Für die Vermessung des Geleises wird nun ein Messfahrzeug, welche seinerseits eine Messeinrichtung in Form eines Lasersenders aufweist, gegen die Referenzeinrichtung hin verfahren und dabei die relative Position des Messfahrzeuges bezüglich dieser Referenzeinrichtung vermessen. Der Messvorgang eines längeren Geleiseabschnittes erfolgt damit diskontinuierlich, da die Referenzeinrichtung immer wieder neu positioniert werden muss.

Die Aufgabe der vorliegenden Erfindung bestand nun darin, ein Messverfahren zu finden, welches einfacher und automatisch zu handhaben ist als die bekannten Verfahren und womit auch längere Geleiseabschnitte kontinuierlich gemessen werden können.

Diese Aufgabe wird erfindungsgemass nach dem Kennzeichen von Anspruch 1 gelöst.

Vorteilhafterweise wird durch das erfindungsgemässe Verfahren nur noch eine Messbasis notwendig, welche auf dem Geleise fahrbar beispielsweise vor die Unterhaltsmaschine gekoppelt werden kann. Nach der Einrichtung zu Messbeginn und Vermessen dieser Position können die weiteren Messungen automatisch ablaufen. Die Distanzvermessung kann entweder mit einer separaten Wegmessung oder mit den Daten der Kreiselplattform erfolgen. Es werden auch keine zusätzlichen, vor der eigentlichen Messstelle auf den Geleisen anzubringende Referenz- oder Messeinrichtungen mehr gebraucht. Dies wirkt sich einerseits in der Verkürzung der Installationszeit und Durchführung der Messung aus wie auch auf die Sicherheit derjenigen Personen, welche die vorher geschilderten Messeinrichtungen auf den Geleisen anzubringen haben. Es entfallen damit auch die Arbeitsunterbrüche, welche sich beim Wechseln Von einer Messeinrichtung auf die Andere bislang ergeben haben, womit in der gleichen Zeitspanne ein deutlich längerer Streckenabschnitt bearbeitet werden kann. Insbesondere lassen sich die Vorarbeiten, nämlich das Anbringen der Reflektoren an den Referenzmarken, auch bei regulärem Bahnbetrieb durchführen.

Eine bevorzugte Ausführungsform des Verfahrens zeichnet sich dadurch aus, dass für die Positionierung des Lichtempfängers um die Hochachse ein Fächerlicht-Laserstrahl verwendet wird und danach mittels eines Punkt-Laserstrahls von unten nach oben in der Nickachse der Lichtempfänger auf den Reflektor positioniert wird, wobei der Lichtempfänger mittels Schrittmotoren bewegt wird. Dadurch ist es möglich, dass sich mittels einer entsprechenden Steuerung der Lichtempfänger zuverlässig selbständig auf den Reflektor positionieren kann.

Eine weitere bevorzugte Ausführungsform der Erfindung sieht vor, dass ein Laser-Scanner als Licht-Sende-Empfänger verwendet wird, welcher selbständig von einem Reflektor auf den nächsten Reflektor in seinem Sichtbereich umschaltet, sobald der aktuell verwendete Reflektor aus einem bestimmten Ausschnitt des Sichtbereiches des Laser-Scanners verschwindet. Durch die Verwendung eines solchen Scanners können die Winkeländerungen elektronisch durch Zeitmessung erfasst werden, was die Positionsberechnung vereinfacht und verkürzt.

Erfindungsgemäss wird für die Durchführung des erfindungsgemässen Verfahrens eine Messeinrichtung nach Anspruch 4 vorgeschlagen.

Ein Ausführungsbeispiel der Erfindung wird nachstehend anhand von Zeichnungen noch näher erläutert.

Es zeigen
Fig. 1 schematisch die Seitenansicht einer erfindungsgemässen Messvorrichtung;
Fig. 2 schematisch die Aufsicht auf die Messvorrichtung nach Fig. 1.

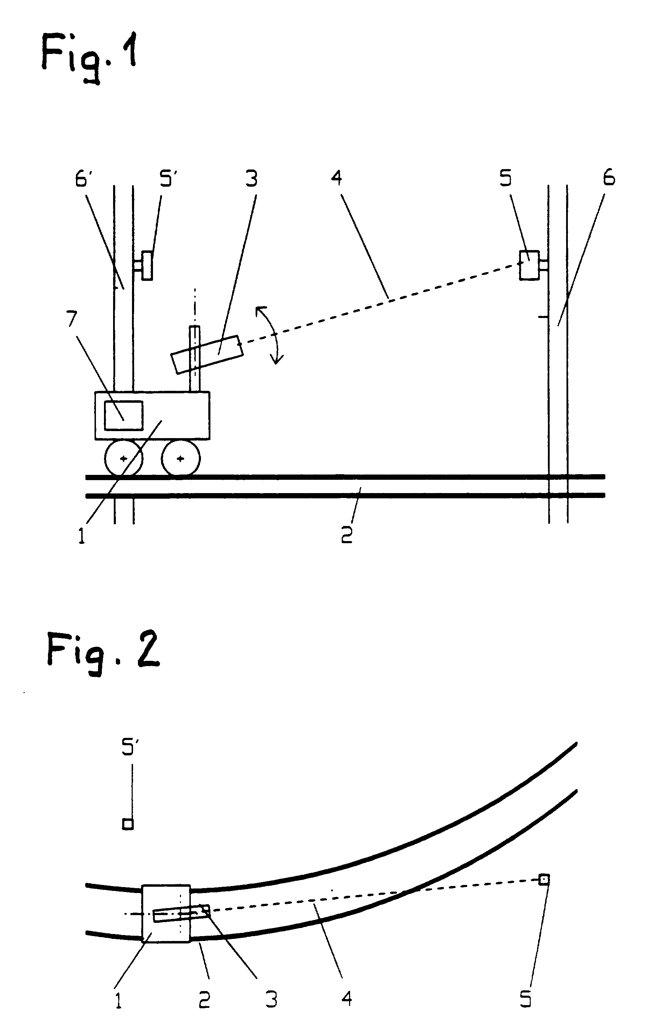

Eine Messplattform 1, welche auf dem Geleise 2 verfahrbar ist, besitzt einen um die Hoch- und Nickachse bewegbaren optischen Sende-Empfangs-Kopf 3, welcher hier vorzugsweise Laserstrahlen 4 aussendet, wie in Fig. 1 dargestellt. Üblicherweise sind die für die Messung zu verwendenden Referenzmarken 5,5' an den Leitungsmasten 6,6' entlang der Geleise 2 angebracht. Im Vermessungsplan ist nun die ursprüngliche Geleiselage in Bezug auf diese Referenzmarken 5,5' festgehalten. Die Aufgabe der Geleisevermessung besteht nun darin, die aktuelle Lage der Geleise in Bezug auf den Vermessungsplan festzustellen und bei Abweichungen mittels spezieller Maschinen den Geleiseverlauf zu korrigieren. Insbesondere wichtig sind diese Messungen beim Unterhalt der Geleise, wenn beispielsweise der Schotter gereinigt wird oder neue Geleisestücke eingesetzt werden müssen. Zu Messbeginn wird nun die Position der Messplattform 1 auf dem Geleise 2 in Bezug zu einer Referenzmarke 5' genau vermessen. Vorzugsweise wird der Messbeginn dabei genau auf die Stelle neben einer Referenzmarkierung 5' gelegt. Diese Messung erfolgt mit den heute bekannten Mitteln, beispielsweise wird der Abstand der Messplattform 1 zur Referenzmarkierung 5' mittels eines Messbandes ermittelt. Diese Messung kann nun mit dem Vermessungsplan verglichen werden. Danach werden die Positionswerte der in der Messplattform integrierten Kreiselplattform 7 auf den Wert Null gesetzt; eine Ausrichtung der Plattform gegen Norden kann entfallen, da für die folgenden Messungen nur die Werte der Relativbewegung verwendet werden. Weiter wird der Sende-Empfangs-Kopf 3 auf die entfernte Referenzmarke 5 ausgerichtet. Vorzugsweise erfolgt dies automatisch, indem zuerst ein senkrechter, fächerförmiger Laserstrahl ausgesendet wird, und der Laserkopf mittels Schrittmotoren beispielsweise von links nach rechts um die Hochachse gedreht wird, bis die vom Sende-Empfangs-Kopf 3 aufgenommenen gespiegelten Laserstrahlen zentriert sind. Damit ist die Ausrichtung um die Hochachse erfolgt. Danach wird ein punktförmiger Laserstrahl ausgesendet, wobei der Sende-Empfangs-Kopf 3 beispielsweise von unten nach oben um die Nickachse bewegt wird, bis auch dieser reflektierte Strahl auf den Sende-Empfangs-Kopf 3 zentriert ist. Da der Laserlichtempfänger 3 vorzugsweise gleichzeitig die Abweichung von Lichtstrahlen in zwei Achsen empfangen und verarbeiten kann, erfolgt gleichzeitig auch noch eine Feinkorrektur in der Hochachse. Diese Positionierung des Sende-Empfangs-Kopf 3 kann solange aufrechterhalten werden, als es die Bewegungsfreiheit der Lagerung des SendeEmpfangs-Kopfes 3 erlaubt. Danach muss der Laserkopf 3 auf eine neue Referenzmarkierung ausgerichtet werden. Die Drehung um die beiden Achsen erfolgt vorzugsweise mittels Schrittmotoren, welche von einer Steuerelektronik, welche die Daten des Laserlicht-Empfängers 3 verarbeitet, angesteuert werden.

Um nun von diesem bei Messbeginn ermittelten Ausgangspunkt aus den während der Vorfahrt der Messplattform 1 befahrenen Geleiseverlauf 2 zu messen, wird folgendermassen verfahren. Die zurückgelegte Distanz D wird von der Kreiselplattform 7 oder einer separaten Wegmessung ermittelt. Die Umdrehungen der Schrittmotoren zur Nachführung des Laser-Kopfes 3 ergeben direkt Winkeländerungssignale in der Hoch- und Nickachse ab, da das Übersetzungsverhältnis der Motoren zur entsprechenden Achse bekannt ist. Die Kreiselplattform 7 liefert ihrerseits absolute Raumlageänderungen der Messplattform als Winkelkorrektursignale, welche zur Korrektur auf die Signale des Laserkopfes 3 beaufschlagt werden. Im Weiteren liefert die Kreiselplattform 7 auch die Änderung der Querlage der Messplattform, beispielsweise bei Überhöhung des Aussengeleises bei Kurven. Die so erhaltenen Werte liefern die aktuelle Position der Messplattform auf dem Geleise, welche nun mit den Daten aus dem Vermessungsplan verglichen werden. Allfällige Abweichungen davon können nun beispielsweise als Korrektursignale in die Unterhaltsmaschine eingespiesen werden. Vorzugsweise sind die Daten des Vermessungsplanes elektronisch verarbeitbar gespeichert, und der Vergleich der Daten und die Berechnung der Abweichung kann beispielsweise vollautomatisch mit Hilfe von elektronischen Rechnern erfolgen. Durch die Kombination der optischen Winkelmessung zu einem Fixpunkt mit der raumstabilisierten Kreiselplattform kann die Positionsbestimmung der Messplattform auf dem Geleise und damit die relative Lage des Geleises zu diesem Fixpunkt in der geforderten Genauigkeit einfach und schnell durchgeführt werden. Durch die Verwendung eines Laserlicht-Scanners kann zudem noch die Zeit eingespart werden, welche beim Wechseln von einer Referenzmarkierung zur Nächsten durch das neue Ausrichten des Sende-Empfangs-Kopfes notwendig ist.

## Patentansprüche

1. Verfahren zur Geleisevermessung anhand von in der Nähe des Geleises, insbesondere an Fahrleitungsmasten positionierten Referenzmarken und einem Vermessungsplan, welcher die Sollposition des Geleises bezüglich der Referenzmarken enthält, wobei bei Beginn der Vermessung die absolute Position einer auf dem Geleise verfahrbar positionierten Messplattform zu einer Referenzmarke bestimmt und deren eventuelle Abweichung vom Sollwert bestimmt wird und der Lichtstrahl eines Licht-Sende-Empfangskopfes auf die Referenzmarke ausgerichtet wird, wobei das Licht mittels eines Reflektors von der Referenzmarke reflektiert wird, dadurch gekennzeichnet, dass danach die Messplattform auf dem Geleise verfahren wird und jeweils die Winkeländerungen des Lichtstrahles, welcher durch Nachführen des um die Hoch- und Nickachse bewegbaren Licht-Sende-Empfangskopfes auf die Referenzmarke ausgerichtet bleibt, zur Messplattform gemessen werden, und dass die Lageänderung der Messplattform beim Verfahren mittels einer raumstabilisierten Kreiselplattform bestimmt wird, wobei die Lageänderungswerte der Kreiselplattform als Korrekturwerte für Winkeländerungswerte des Lichtstrahles verwendet werden, und dass der somit ermittelte Wert mit dem Sollwert des Vermessungsplanes verglichen und festgehalten wird, und dass gegebenenfalls aufgrund der Werte eine Korrektur des Geleises vorgenommen wird.

2. Verfahren nach Anspruch 1, dadurch gekennzeichnet, dass für die Positionierung des Lichtempfängers um die Hochachse ein Fächerlicht-Laserstrahl verwendet wird und danach mittels eines Punktlaserstrahls von unten nach oben in der Nickachse der Lichtempfänger auf den Reflektor positioniert wird, wobei der Lichtempfänger mittels Schrittmotoren bewegt wird.

3. Verfahren nach einem der Ansprüche 1 oder 2, dadurch gekennzeichnet, dass ein Laser-Scanner als Lichtsendeempfänger verwendet wird, welcher selbständig von einem Reflektor auf den nächsten Reflektor in seinem Sichtbereich umschaltet, sobald der aktuell verwendete Reflektor aus einem bestimmten Ausschnitt des Sichtbereiches des Laser-Scanners verschwindet.

4. Messeinrichtung zur Durchführung des Verfahrens nach den Ansprüchen 1 bis 3, wobei als Messplattform (1) ein mit Rädern versehenes, auf dem Geleise (2) verfahrbares Gestell verwendet wird und auf welchem weiter eine durch Antriebsmittel, beispielsweise Schrittmotoren, um zwei Achsen dreh- und schwenkbare optische Laser-Sende- und Empfangseinrichtung (3) angeordnet ist sowie weiter ein mit Mitteln zur Positionierung an den Referenzmarkierungen versehener Spiegelreflektor vorgesehen ist, dadurch gekennzeichnet, dass auf dem Gestell eine Laser-Kreiselplattform (7) zur Raumlageerfassung angeordnet ist, wobei die Kreiselplattform und die Empfangseinrichtung mit einer Steuer- und Auswertungselektronik verbunden sind.

## Claims

1. A process for surveying railway lines by using reference marks positioned adjacent the railway line, particularly adjacent overhead line masts, and a surveying plan containing the desired position of the railway line relative to the reference marks, wherein at the start of the survey the absolute position of a measurement platform displaceably positioned on the railway line is determined relative to a reference mark and its possible deviation from the desired value is determined and the light beam of a light-emitting and receiving head is aligned with the reference mark, wherein the light is reflected from the reference mark by means of a reflector, characterised in that thereafter the measurement platform is displaced along the railway line and the changes in angle of the light beam, which remains aligned with the reference mark by servo guidance of the light-emitting and receiving head which is movable about vertical and pitch axes, relative to the measurement platform are measured, and in that the change in position of the measurement platform during displacement is determined by a spatially stabilized gyro-platform, wherein the values of the positional changes of the gyro-platform are used as correction values for the values of angular change of the light beam, and in that the thus resulting value is compared with the desired value of the surveying plan and retained, and in that, if necessary, a correction of the railway line is undertaken on the basis of the value.

2. A process according to claim 1, characterised in that a fan light laser beam is used for positioning the light receiver about the vertical axis and thereafter, by means of a point source laser beam, the light receiver is positioned upwardly from below on the pitch axis on the reflector, the light receiver being displaced by means of stepper motors.

3. A process according to claim 1 or claim 2, characterised in that as light receiver a laser scanner is used which independently switches over from one reflector to the next reflector within its visibility range as soon as the actually used reflector disappears from a defined sector of the visibility range of the laser scanner.

4. Measuring apparatus for performing the process according to claims 1 to 3, wherein as measuring platform (1) a wheeled frame displaceable on the rail track (2) is used on which is arranged, in addition, an optical laser transmitting and receiving device (3) rotatable and pivotable about two axes by means of driving means, eg. stepper motors, and furthermore means for positioning mirror reflectors at the reference marks is provided, characterised in that a laser gyro-platform (7) is provided on the frame for detecting spatial position, wherein the gyro-platform and the receiving device are connected to electronic controlling and evaluating circuitry.

## Revendications

1. Procédé de mesurage de voie ferrée à l'aide de marques de référence positionnées à proximité de la voie, notamment à des supports de caténaire et d'un plan de mesurage qui contient la position de consigne de la voie relativement aux marques de référence, où il est déterminé au début du mesurage la position absolue d'une plateforme de mesure positionnée de façon déplaçable sur la voie relativement à une marque de référence et où il est déterminé l'écart éventuel de celle-ci par rapport à la valeur de consigne et où le rayon de lumière d'une tête d'émission et de réception de lumière est orienté sur la marque de référence, où la lumière est réfléchie au moyen d'un réflecteur par la marque de référence, caractérisé qu'ensuite la plateforme de mesure est déplacée sur la voie et qu'on mesure respectivement les modifications d'angle du rayon de lumière qui reste orienté par la poursuite de la tête d'émission et de réception de lumière déplaçable autour des axes haute et de tangente sur la marque de référence, relativement à la plateforme de mesure, et en ce que la modification de la position de la plateforme de mesure est définie dans le procédé au moyen d'une plateforme circulaire stabilisée spatialement, les valeurs de modification de la position de la plateforme circulaire étant utilisées comme valeurs de correction pour les valeurs de modifications d'angle du rayon de lumière et en ce que la valeur ainsi déterminée est comparée à la valeur de consigne du plan de mesurage et qu'elle est retenue, et en ce qu'on procède le cas échéant sur la base des valeurs à une correction de la voie ferrée.

2. Procédé selon la revendication 1, caractérisé en ce qu'on utilise pour le positionnement du récepteur de lumière autour de l'axe haute un rayon laser à lumière dispersée et qu'on positionne ensuite au moyen d'un rayon laser à points depuis le bas vers le haut dans l'axe de tangente le récepteur de lumière au réflecteur, le récepteur de lumière étant déplacé au moyen de moteurs pas-à-pas.

3. Procédé selon l'une des revendications 1 ou 2, caractérisé en ce qu'on utilise un scanner à laser comme récepteur d'émission de lumière qui commute automatiquement d'un réflecteur au réflecteur suivant dans son étendue de visée dès que le réflecteur actuellement utilisé disparaît d'un secteur déterminé de l'étendue de visée du scanner à laser.

4. Dispositif de mesure pour la mise en oeuvre du procédé selon les revendications 1 à 3, dans lequel on utilise comme plateforme de mesure (1) un châssis pourvu de roues déplaçable sur la voie ferrée (2) et sur lequel est disposé en outre un dispositif d'émission et de réception optique à laser (3) pouvant tourner et pivoter autour de deux axes par l'intermédiaire de moyens d'entraînement, par exemple de moteurs pas-à-pas, et où il est prévu en outre un miroir réflecteur équipé de moyens pour le positionnement aux marques de référence, caractérisé en ce qu'il est disposé sur le châssis une plateforme tournante à laser (7) pour détecter la position spatiale, la plateforme tournante et le dispositif de réception étant reliés à une électronique de commande et d'évaluation.
